# EUROPEAN PATENT SPECIFICATION

(11) **EP 2 479 068 B1**
(45) Date of publication and mention of the grant of the patent: **26.02.2014**
(21) Application number: 12152530.7
(22) Date of filing: 25.01.2012
(51) Int. Cl.: B60R 13/02, B60N 2/46, B60N 3/02

(54) **Pull pocket for vehicle door and vehicle door provided with the same**
Zugtasche für eine Fahrzeugtür und Fahrzeugtür damit
Poche à tirette pour portière de véhicule et portière de véhicule fournie avec celle-ci

(30) Priority: 25.01.2011 JP 2011013196
(43) Date of publication of application: 25.07.2012
(73) Proprietor: Honda Motor Co., Ltd., Tokyo 107-8556 (JP); Kasai Kogyo Co., Ltd., Koza-gun Kanagawa 253-0106 (JP)
(72) Inventor: Odagiri, Shuhei, Saitama, 351-0193 (JP); Takeuchi, Toshimasa, Saitama, 351-0193 (JP); Tamatsukuri, Tetsuo, Tochigi (JP)
(74) Representative: Trossin, Hans-Jürgen

(56) References cited:
- GB-A- 2 087 811
- JP-A- 2010 188 910
- US-A1- 2009 121 515

## Description

The present invention relates to a pull pocket for a vehicle door adapted to be gripped by a vehicle occupant when the vehicle door is opened or closed, and comprising a pull pocket body of a bottomed box-like shape opened at a top end, and also relates to a vehicle door provided with such pull pocket.

Vehicle doors generally include a door body for opening and closing a door opening formed in a vehicle body, a door lining or trim provided on an interior side of the door body, an armrest projecting from the door lining into a vehicle passenger compartment, and a box-shaped pull pocket formed in the arm rest with a top end opened. The pull pocket has a grip portion adapted to be gripped by a vehicle occupant when the door is opened or closed.

The pull pocket having such grip portion facilitates easy opening or closing of the vehicle door. A typical example of such pull pockets and vehicle doors is disclosed in Japanese Patent Application Laid-open Publication (JP-A) No. 2010-188910.

In the disclosed vehicle door, the grip portion is formed by an inwardly swelled portion of an armrest projecting into a hollow internal space of a pull pocket body through an opening formed in an interior-side sidewall of the pull pocket body. Since the grip portion is not an integral part of the pull pocket body but is formed as a part of the armrest, the disclosed pull pocket requires additional work for parts control and assembly. It may be considered that the grip portion is formed separately from the pull pocket body and then the grip portion and the pull pocket body are assembled together to form a pull pocket. However, use of the grip portion formed separately from the pull pocket body will result in an increased number of parts, failing to reduce costs of production and assembly.

It is accordingly an object of the present invention to provide a pull pocket for vehicle doors, which is easy to assembly and can be manufactured at a low cost, thereby contributing to highly efficient assembly and cost reduction of a vehicle door.

According to a first aspect of the present invention, there is provided a pull pocket for a vehicle door adapted to be gripped by a vehicle occupant when the vehicle door is opened or closed, comprising: a pull pocket body of a bottomed box-like shape opened at a top end thereof, the pull pocket body including an interior-side sidewall having a hinge at an upper end thereof and a retaining opening located below the hinge; and a grip section formed integrally with the hinge and foldable about the hinge to lie over an inner surface of the interior-side sidewall to thereby form a grip portion projecting into a hollow interior space of the pull pocket body, the grip section including a locking projection interlockingly engageable with the retaining opening of the interior-side sidewall to keep the grip section in a folded position.

With this arrangement, since the grip section is formed as an integral part of the pull pocket body via the hinge, a grip portion of the pull pocket can be readily formed by folding the grip section about the hinge to lie over the inner surface of the interior-side sidewall and keeping the grip section in the thus folded position via interlocking engagement between the locking projection on the grip section and the retaining opening in the interior-side sidewall. The pull pocket can thus be assembled easily and efficiently, which will reduce costs of the vehicle door in which the pull pocket is incorporated.

Preferably, the pull pocket body and the grip section are integrally formed into a one-piece unitary structure molded of synthetic resin. The molded pull pocket can be produced less costly, which will contribute to cost reduction of the vehicle door provided with the pull pocket.

In one preferred form of the invention, the locking projection is a clip. According to another preferred form the invention, the locking projection is a locking prong.

According to another aspect of the present invention, there is provided a vehicle door provided with the pull pocket of the foregoing structure.

Certain preferred structural embodiments of the present invention will be described below with reference to the accompanying sheets of drawings, in which:
Fig. 1 is a perspective view of a vehicle body with a door opened to show an interior side of door in which a pull pocket structure according to the present invention is incorporated;
Fig. 2 is a perspective view of the vehicle door;
Fig. 3 is a plan view of a part of the vehicle door shown in Fig. 2;
Fig. 4 is a perspective view of a pull pocket according to a first embodiment of the present invention, showing the pull pocket as it is in a molded state with a grip section disposed in an extended position;
Fig. 5 is a view similar to Fig. 4, but showing the pull pocket as viewed from an interior side of the vehicle body;
Fig. 6 is a perspective view of the pull pocket as it is in an assembled or installed state with the grip section held in a folded position Fig. 7 is a plan view of the pull pocket of Fig. 6;
Fig. 8 is a cross-sectional view taken along the line 8-8 of Fig. 3;
Fig. 9 is a cross-sectional view taken along the line 9-9 of Fig. 3;
Fig. 10 is a cross-sectional view taken along the ine 10-10 of Fig. 9;
Fig. 11 is a perspective view similar to Fig. 4, but showing a pull pocket according to a second embodiment of the present invention;
Fig. 12 is a perspective view of the pull pocket of Fig. 11 as viewed from an interior side of the vehicle body; and
Fig. 13 is an enlarged view of a part 13 of Fig. 12

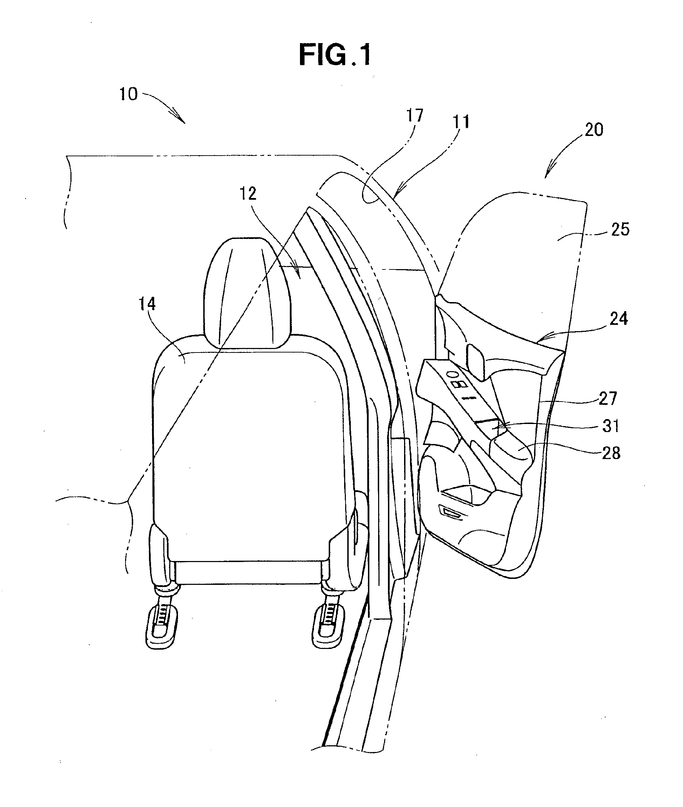

Referring now Fig. 1, there is shown in perspective a vehicle 10 having a vehicle body 11 including a passenger compartment 12 in which a driver seat 14 is installed for being seated by a driver (vehicle occupant). The vehicle body 11 has a door opening 17 on a lateral outer side of the driver seat 14 for allowing the driver to get in and out of the vehicle 10, and a vehicle door 20 for opening and closing the door opening 17.

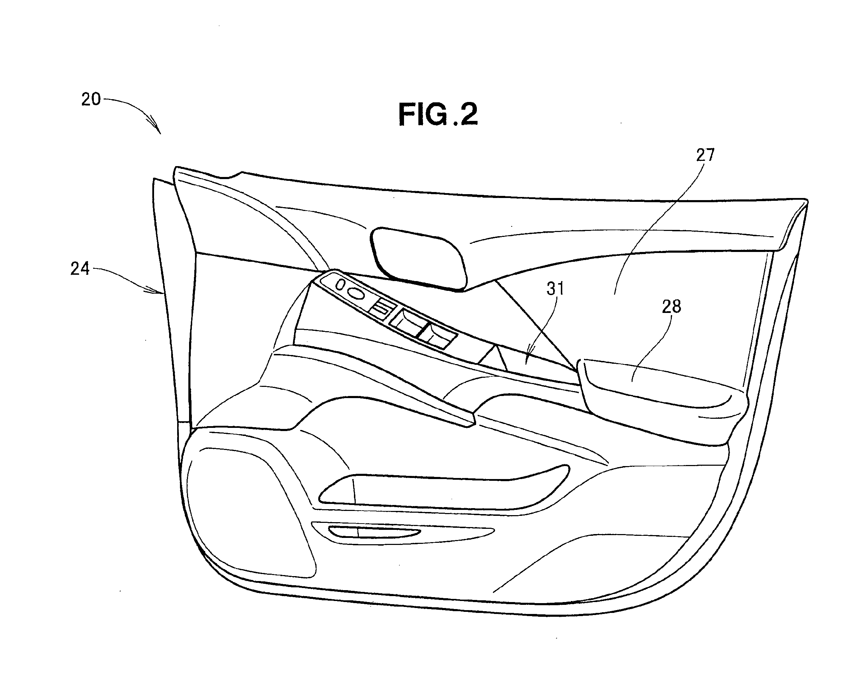

As shown in Figs. 1 and 2, the vehicle door 20 includes a door body 24 hinged to the vehicle body 11 at a front end thereof, and a door glass 25 vertically movably mounted on the door body 24. The door body 24 has a door lining 27 covering an interior side of the door body 24, an armrest 28 provided horizontally on a vertical central portion of the door lining 27, and a pull pocket (also called "door pocket") 31 provided in the armrest 28 and adapted to be gripped by the driver (vehicle occupant) when the door 20 is opened or closed.

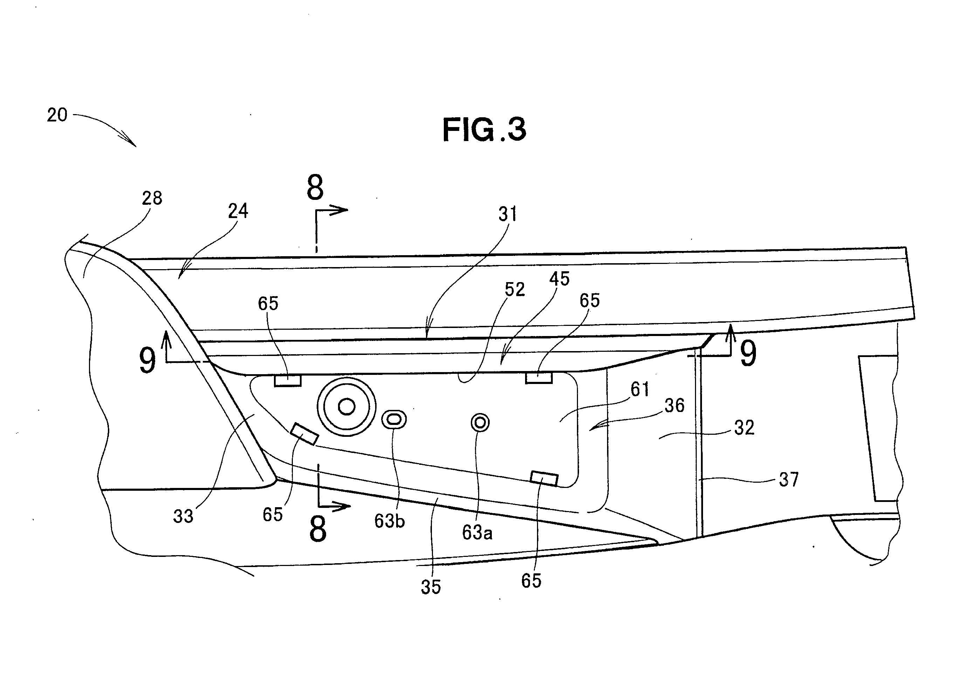

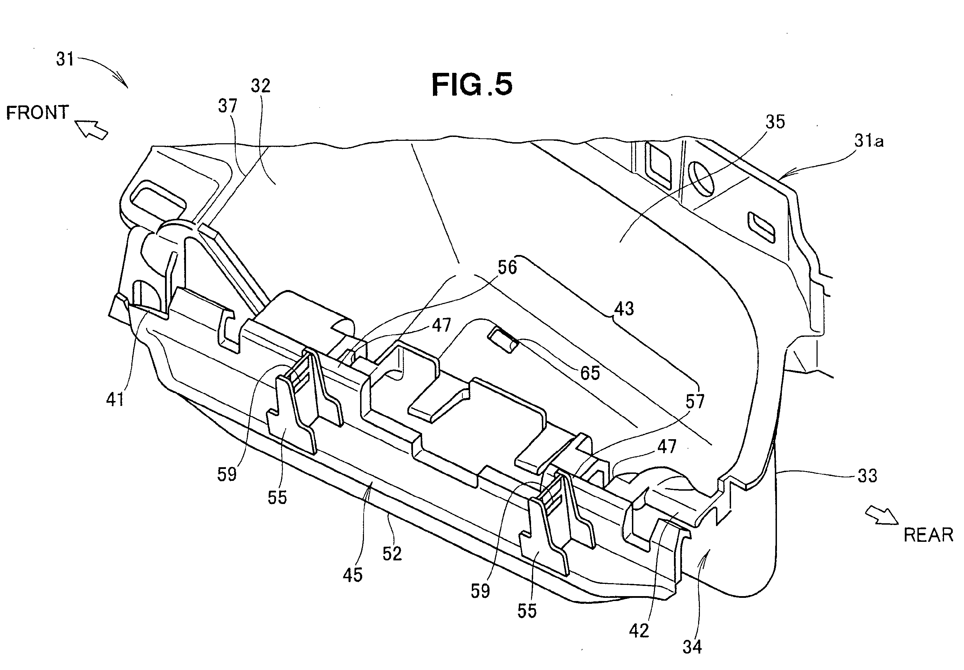

As shown in Figs. 3 to 6, the pull pocket 31 includes a pull pocket body 31a of a bottomed box-like shape opened at a top end 37 thereof and having a front sidewall 32, a rear sidewall 33, an interior-side sidewall 34, an exterior-side sidewall 35, and a bottom wall 36.

The interior-side sidewall 34 has a recess upper end portion 44 formed in an inner surface 34a thereof, and a hinge 43 formed at an upper end thereof. The pull pocket 30 also includes a grip section 45 formed integrally with the hinge 43 and foldable about the hinge 43 to lie over the recessed upper end portion 44 of the inner surface 34a of the interior-side sidewall 34. The box-shaped pull pocket body 31a and the grip section 45 are integrally formed into a one-piece unitary structure molded of synthetic resin.

The recessed upper end portion 44 of the interior-side sidewall 34 is formed by a substantially vertical lower wall section 48 and an inclined upper wall section 49 extending obliquely outward from an upper end of the vertical lower wall section 48. The recessed upper end portion 44 further has a front cutout recess 41 located adjacent to the front sidewall 32 and extending vertically downward from the upper end to an intermediate portion of the recessed upper end portion 44, a rear cutout recess 42 formed by removing a part of the inclined upper wall section 49 located adjacent to the rear sidewall 33, and front and rear retaining openings 47, 47 extending vertically downward from the upper end to a lower end of the recessed upper end portion 44 for engagement with part of the grip section 45.

The hinge 43 includes a front hinge part 56 extending from a rear end of the front cutout recess 41 toward a longitudinal central portion of the interior-side sidewall 34 along an upper edge of the interior-side sidewall 34, and a rear hinge part 56 extending from a front end of the rear cutout recess 42 toward the longitudinal central portion of the interior-side sidewall 34 along the upper edge of the interior-side sidewall 34. The front hinge part 56 and the rear hinge part 57 are separated from each other.

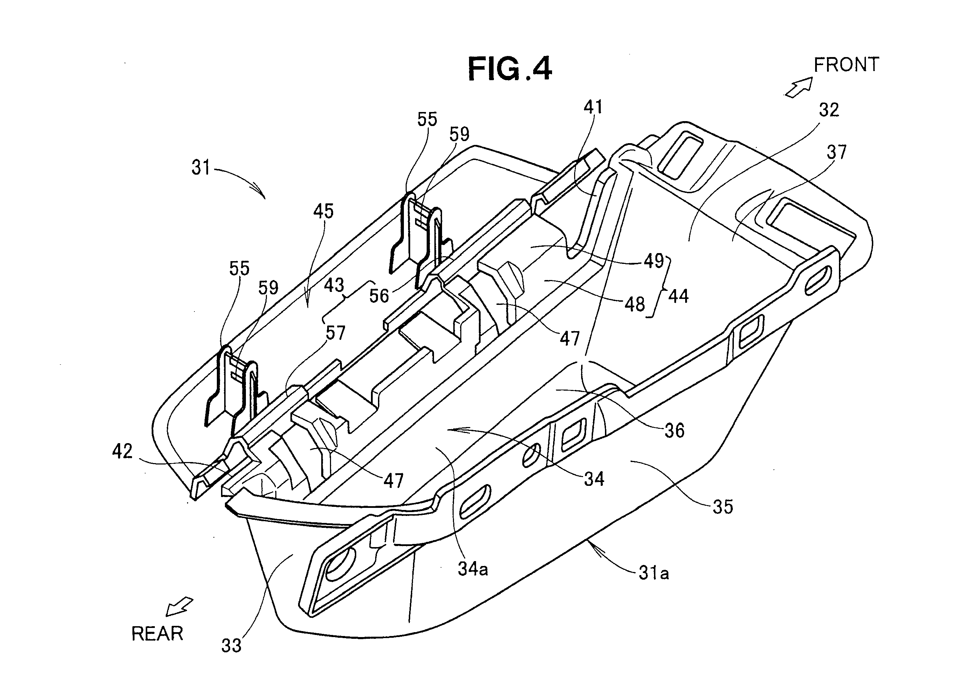

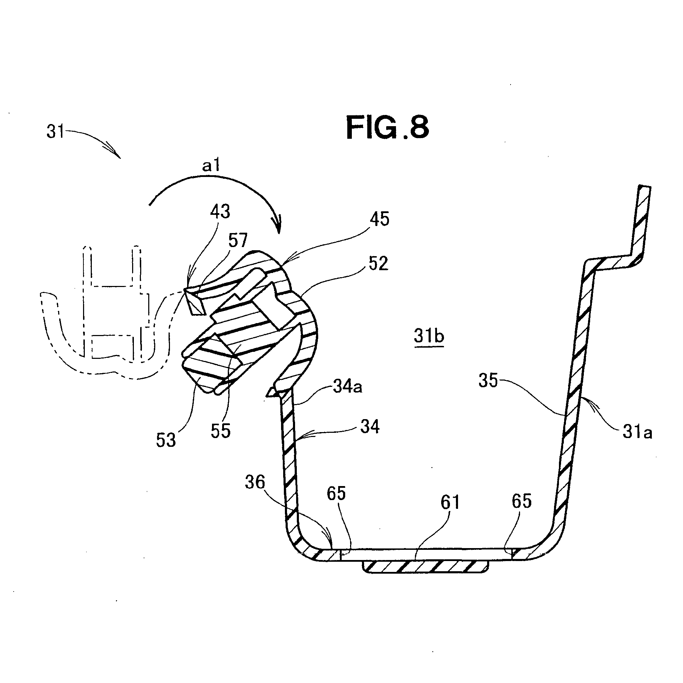

In a molded state of the pull pocket 31, the grip section 45 includes an elongated base 52 contiguous with the front and rear hinge parts 56, 57 and projecting from the hinge parts 56, 57 in a lateral outward direction of the pull pocket body 31a, and front and rear clip stands 55, 55 formed integrally with and projecting from an inner surface of the base 52 (shown on an upper side in Fig. 4) for supporting clips 53, 53 (Fig. 8). As the grip section 45 is in the extended state indicated by phantom lines shown in Fig. 8, the elongate base 52 has an outwardly curved transverse cross section and is swelling outwardly of the pull pocket body 31a.

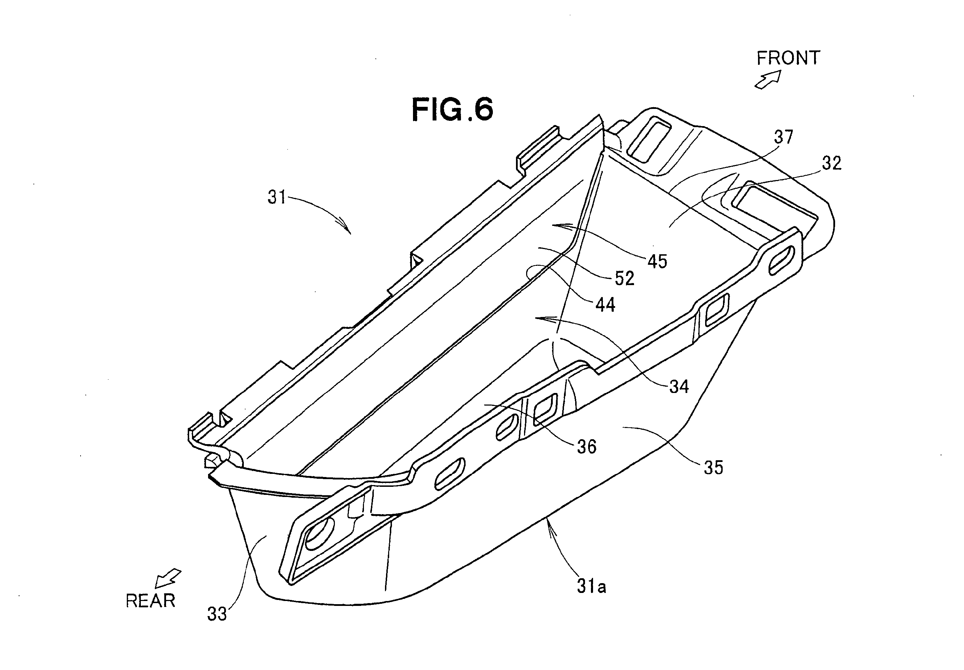

When the grip section 45 is folded about the hinge 43 to lie over the inside surface 34a of the interior-side sidewall 34, the elongated base 52 of the grip section 45 forms a grip portion disposed inside the pull pocket body 31a and projecting into a hollow interior space 31b of the pull pocket body 31a, as shown in Fig. 6. Due to its outwardly curved transverse cross section, the elongate base 52 forming the grip portion bulged into the hollow interior space 31b of the pull pocket body 31a, allowing the vehicle occupant to grip the grip portion with increased reliability. The clips 53, 53 are interlockingly engageable with the front and rear retaining openings 47, 47 so as to keep the grip section 45 in a folded position shown in Fig. 6. Each of the clip stands 56, 56 has a pair of vertically spaced supporting holes 59 formed at an upper end portion thereof for supporting a corresponding one of the clips 53. The clip 53 forms a locking projection on the grip section 45.

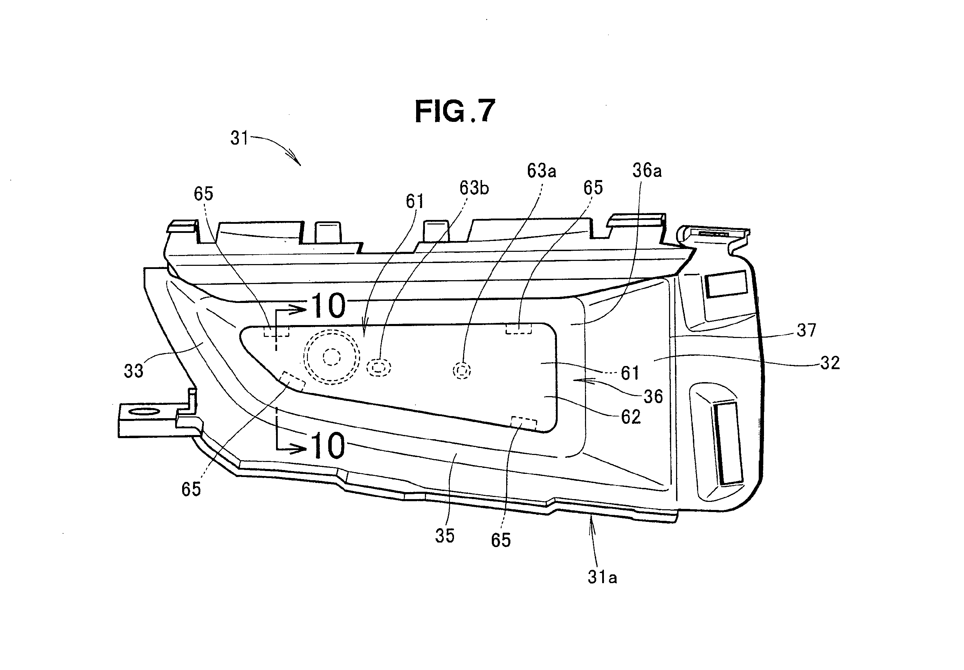

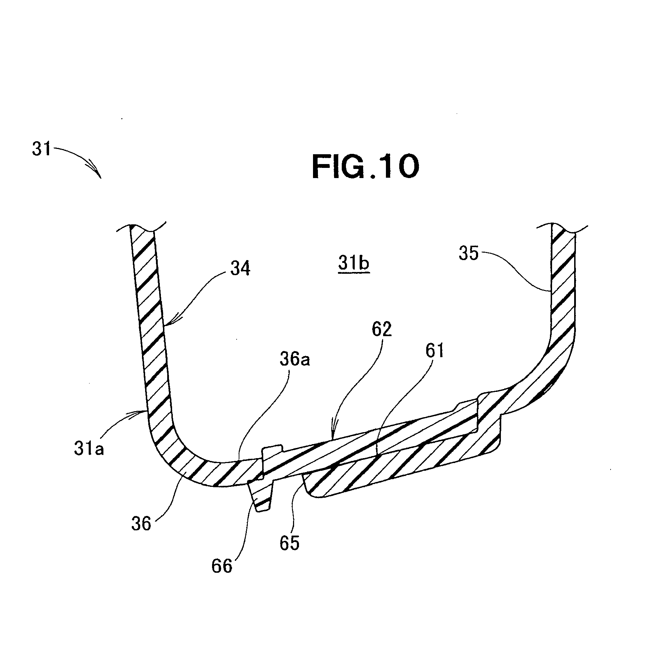

As shown in Figs. 7 and 10, an inner surface 36a of the bottom wall 36 has a recessed central portion 61, and a decorative bottom cover plate 62 is placed on the inner surface 36a to cover the recessed central portion 61. For the purpose of molding, the inner surface 36a of the bottom wall 36 has elector pin marks 63a, 63b (Fig. 7) formed thereon when a molded pull pocket is removed from a mold by means of ejector pins. The decorative bottom cover plate 62 is provided to conceal the ejector pin marks 63a, 63b left on the inner surface 36a of the bottom wall 36. The bottom wall 36 has a plurality of engagement holes 65 formed at intervals along a peripheral edge of the recessed central portion 61, and the decorative bottom plate 62 has a plurality of locking prongs 66 (Fig. 10) interlockingly engageable with the engagement holes 65 of the bottom wall 36 to thereby retain the decorative bottom cover 62 on the recessed central portion 61 of the inner surface 36a of the bottom wall 36.

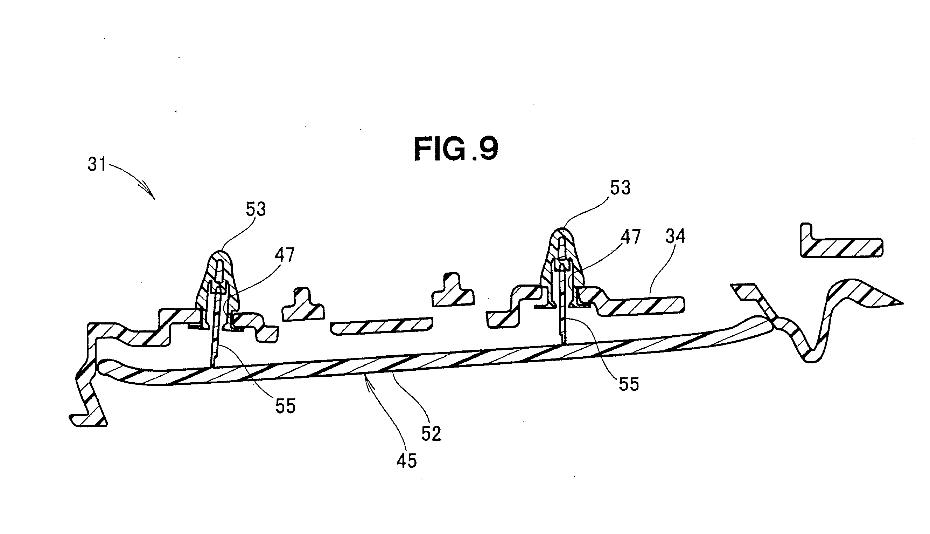

Referring back to Fig. 4, as the pull pocket 31 is in the molded state, the grip section 45 projects substantially perpendicularly from the upper end of the interior-side sidewall 34 in a lateral outward direction of the pull pocket body 31a. For assembly, the grip section 45 which is disposed in an extended position indicated by phantom lines shown in Fig. 8 is turned in the direction of the arrow al about the hinge 43 until the locking projections (clips) 53, 53 of the grip section 45 come into interlocking engagement with the retaining openings 47, 47 of the interior-side sidewall 34, as shown in Fig. 9. By virtue of the interlocking engagement between the locking projections 53, 53 and the retaining openings 47, 47, the grip section 45 is kept in a folded position shown in Figs. 6-9, where the elongate base 52 of the grip section 54 is disposed inside the pull pocket body 31a and projects into the hollow internal space 31b of the pull pocket body 31a. The elongate base 52 thus forms a grip portion of the pull pocket 31, which is adapted to be gripped by a vehicle occupant when the vehicle door 20 (Fig. 1) is opened or closed.

The thus assembled pull pocket 31 is assembled or installed in an opening of the armrest 28 of the vehicle door 20, as shown in Figs. 1 to 3.

As thus far described, the pull pocket 31 according to the first embodiment of the present invention includes a pull pocket body 31a having a bottomed box-like shape opened at a top end 37 thereof, and a grip section 45 formed integrally with an interior-side sidewall 34 of the box-like shaped pull pocket body 31a via a hinge 43 formed at an upper end of the interior-side sidewall 34. The grip section 45 is foldable about the hinge 43 to lie over an inner surface 34a of the interior-side sidewall 34, thereby forming a grip portion 52 projecting into a hollow internal space 31b of the box-like shaped pull pocket body 31a. The grip section 45 has locking projections 53 interlockingly engageable with retaining openings 47 in the interior-side sidewall 34 to thereby keep the grip section 45 in the folded position.

With this arrangement, because the grip section 45 is formed as an integral part of the pull pocket body 31a via the hinge 43, a grip portion of the pull pocket which is adapted to be gripped by a vehicle occupant can be readily formed by turning the grip section 45 about the hinge 43 into the box-like shaped pull pocket body 31a until it assumes a folded position where the grip section 45 lies over the inner surface 34a of the interior-side sidewall 34 and is kept in the folded position via the interlocking engagement between the locking projections 53 on the grip section 45 and the retaining openings 47 of the interior-side sidewall 34. The pull pocket can thus be assembled easily and efficiently, which leads to highly efficient assembly and cost reduction of a vehicle door in which the pull pocket is incorporated.

The pull pocket body 31a and the grip section 45 are integrally formed into a one-piece unitary structure molded of synthetic resin. The molded pull pocket can be manufactured less costly and is well-suited to mass production, leading to further cost reduction of the vehicle door.

The locking projections 53 comprise a clip provided on an upper end portion of a clip stand 55 formed integrally with the base 52 of the grip section 45. By thus using the clips 53 as locking projections, it is possible to simplify the shape and configuration of the pull pocket 31, leading to reduction in mold cost.

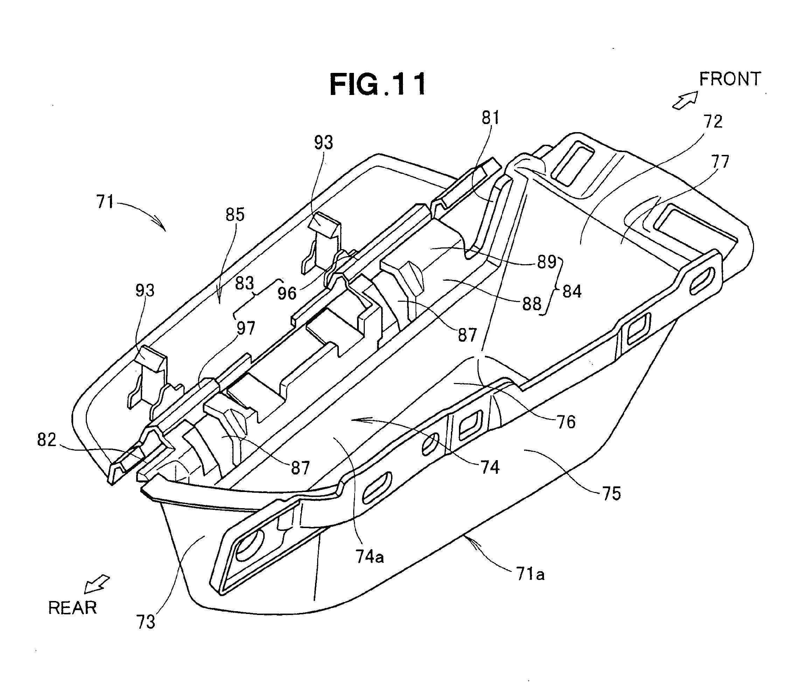

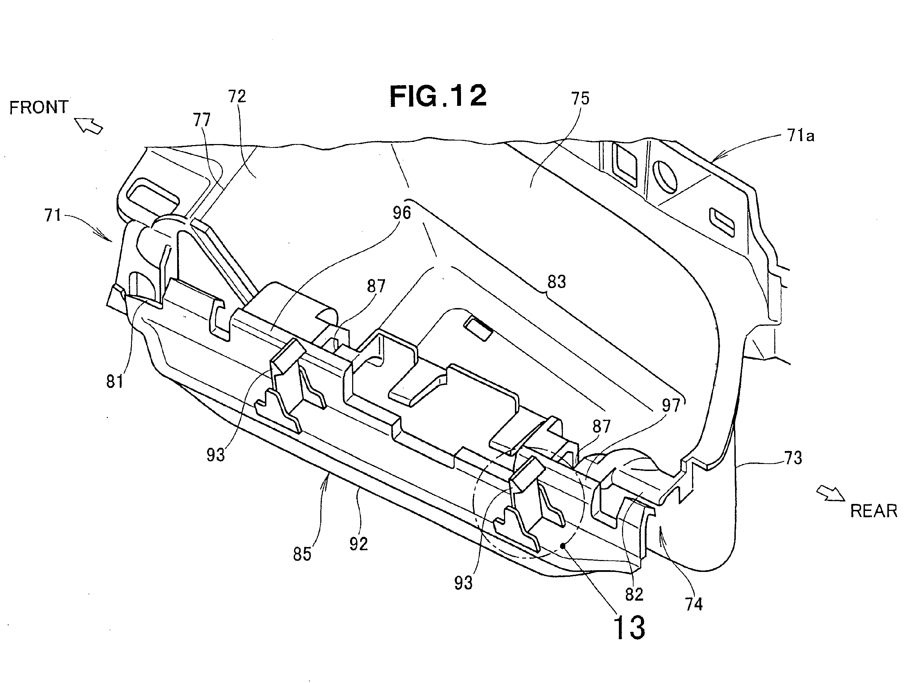

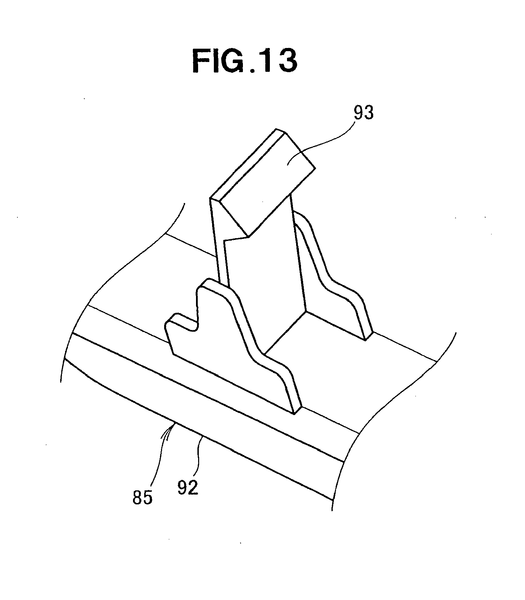

Referring next to Figs. 11 to 13, a description will be made about a pull pocket 71 according to a second embodiment of the present invention. The pull pocket 71 is molded of synthetic resin and, in an as-molded state, it includes a pull pocket body 71a of a bottomed box-like shape opened at a top end 77 thereof, and a grip section 85 formed integrally with an upper end of an interior-side sidewall 74 of the pull pocket body 71a via a hinge 83 formed at the upper end of the interior-side sidewall 74. The grip section 85 is foldable about the hinge 83 to lie over an inner surface 74a of the interior-side sidewall 74 in the same manner as the grip section 45 of the first embodiment shown in Fig. 4.

The box-like pull pocket body 71a has a front sidewall 72, a rear sidewall 73, the interior-side sidewall 74, an exterior-side sidewall 75, and a bottom wall 76. The interior-side sidewall 74 has a recess upper end portion 84 formed in an inner surface 74a thereof, and the hinge 83 is formed at the upper end of the interior-side sidewall 74.

The recessed upper end portion 84 of the interior-side sidewall 74 is formed by a substantially vertical lower wall section 88 and an inclined upper wall section 89 extending obliquely outward from an upper end of the vertical lower wall section 88. The recessed upper end portion 84 further has a front cutout recess 81 located adjacent to the front sidewall 72 and extending vertically downward from the upper end to an intermediate portion of the recessed upper end portion 84, a rear cutout recess 82 formed by removing a part of the inclined upper wall section 89 located adjacent to the rear sidewall 73, and front and rear retaining openings 87, 87 extending vertically downward from the upper end to a lower end of the recessed upper end portion 84 for engagement with part of the grip section 85.

The hinge 83 includes a front hinge part 96 extending from a rear end of the front cutout recess 81 toward a longitudinal central portion of the interior-side sidewall 74 along an upper edge of the interior-side sidewall 74, and a rear hinge part 97 extending from a front end of the rear cutout recess 82 toward the longitudinal central portion of the interior-side sidewall 74 along the upper edge of the interior-side sidewall 74. The front hinge part 96 and the rear hinge part 97 are separated from each other.

In a molded state of the pull pocket 71, the grip section 85 includes an elongated base 92 contiguous with the front and rear hinge parts 96, 97 and projecting from the hinge parts 96, 97 in a lateral outward direction of the pull pocket body 71a, and front and rear locking projections 93, 93 formed integrally with and projecting from an inner surface of the base 92 (shown on an upper side in Fig. 11). The locking projections 93 are in the form of a prong. When the grip section 85 is folded about the hinge 83 to lie over the inside surface 74a of the interior-side sidewall 74, the elongated base 92 of the grip section 85 is disposed inside the pull pocket body 71a and projects into a hollow interior space 71b of the pull pocket body 71a in the same manner as the elongated base 52 of the first embodiment discussed above with reference to Figs. 6 to 9. The thus arranged base 92 forms a grip portion of the pull pocket 71, which is adapted to be gripped by a vehicle occupant when the vehicle door is opened or closed. The locking prongs 93, 93 are interlockingly engageable with the front and rear retaining openings 87, 87 so as to keep the grip section 85 in a folded position. Since the locking prongs 93 are formed integrally with the base 82 of the grip section 85 and engageable directly with the retaining opening 87 without requiring a separate locking part, such as a clip, the pull pocket 71 according to the second embodiment can be manufactured at a lower cost than the pull pocket 31 of the first embodiment.

Likewise the pull pocket 31 of the first embodiment, the pull pocket 71 of the second embodiment is assembled or set in an opening of the armrest 8 (Fig. 1) of the vehicle door 20.

With the arrangements so far described, the present invention can be used advantageously as a pull pocket for a vehicle door adapted to be gripped by a vehicle occupant when the vehicle door is opened or closed, and also as a vehicle door provided with such pull pocket.

## Claims

1. A pull pocket (31; 71) for a vehicle door (20) adapted to be gripped by a vehicle occupant when the vehicle door is opened or closed, comprising:
a pull pocket body (31a, 71a) of a bottomed box-like shape opened at a top end (37, 77) thereof, **characterized in that** the pull pocket body includes an interior-side sidewall (34; 74) having a hinge (43; 83) at an upper end thereof and a retaining opening (47; 87) located below the hinge; and **in that**
a grip section (45; 85) is formed integrally with the hinge (43; 83) and foldable about the hinge to lie over an inner surface (34a; 74a) of the interior-side sidewall (34; 74) to thereby form a grip portion projecting into a hollow interior space (31b; 71b) of the pull pocket body (31a; 71a), the grip section including a locking projection (53; 93) interlockingly engageable with the retaining opening (47; 87) of the interior-side sidewall (34; 74) to keep the grip section (45; 85) in a folded position.

2. The pull pocket of claim 1, wherein the pull pocket body (31a; 71a) and the grip section (45; 85) are integrally formed into a one-piece unitary structure molded of synthetic resin.

3. The pull pocket of claim 1 or 2, wherein the locking projection is provided with a clip.

4. The pull pocket of claim 1 or 2, wherein the locking projection is a locking prong.

5. A vehicle door provided with the pull pocket of any one of claims 1-4.

## Patentansprüche

1. Ziehtasche (31; 71) für eine Fahrzeugtür (20), welche dazu eingerichtet ist, durch einen Fahrzeuginsassen gegriffen zu werden, wenn die Fahrzeugtür geöffnet oder geschlossen wird, umfassend:
einen Ziehtaschenkörper (31a, 71a), welcher eine boxartige Form mit einem Boden aufweist und an seinem oberen Ende (37, 77) geöffnet ist, **dadurch gekennzeichnet, dass** der Ziehtaschenkörper eine innenseitige Seitenwand (34; 74) umfasst, die ein Scharnier (43; 83) an ihrem oberen Ende und eine unterhalb des Scharniers angeordnete Halteöffnung (47; 87) aufweist; und dadurch, dass
ein Greifabschnitt (45; 85) integral mit dem Scharnier (43; 83) ausgebildet und um das Scharnier klappbar ist, um über einer Innenfläche (34a; 74a) der innenseitigen Seitenwand (34; 74) zu liegen, um dadurch einen in einen hohlen Innenraum (31b; 71b) des Ziehtaschenkörpers (31a; 71a) vorstehenden Greifbereich zu bilden, wobei der Greifabschnitt einen Riegelvorsprung (53; 93) umfasst, welcher ineinandergreifend mit der Halteöffnung (47; 87) der innenseitigen Seitenwand (34; 74) in Eingriff steht, um den Greifabschnitt (45; 85) in einer geklappten Position zu halten.

2. Ziehtasche nach Anspruch 1, wobei der Ziehtaschenkörper (31a; 71 a) und der Greifabschnitt (45; 85) integral in einer aus Kunstharz geformten einstückigen einheitlichen Struktur gebildet sind.

3. Ziehtasche nach Anspruch 1 oder 2, wobei der Riegelvorsprung mit einem Clip bereitgestellt ist.

4. Ziehtasche nach Anspruch 1 oder 2, wobei der Riegelvorsprung eine Riegelzinke ist.

5. Fahrzeugtür, welche mit der Ziehtasche nach einem der Ansprüche 1-4 bereitgestellt ist.

## Revendications

1. Poche à tirette (31; 71) pour portière de véhicule (20) adaptée pour être saisie par un occupant du véhicule lorsque la portière du véhicule est ouverte ou fermée, comprenant:
un corps de poche à tirette (31a, 71a) en forme de boîte à fond ouverte à l'extrémité supérieure (37, 77),
**caractérisée en ce que** le corps de poche à tirette comprend une paroi latérale côté intérieur (37; 74) présentant une charnière (43; 83) à une extrémité supérieure de celle-ci, et une ouverture de retenue (47; 87) située en dessous de la charnière, et **en ce que**
une section de saisie (45; 85) est formée intégralement avec la charnière (43; 83) et est pliable autour de la charnière afin de s'étendre au-dessus d'une surface intérieure (34a; 74a) de la paroi latérale côté intérieur (34; 74) de manière à former ainsi une partie de saisie faisant saillie dans un espace intérieur creux (31b; 71b) du corps de poche à tirette (31a; 71a), la section de saisie comprenant une saillie de verrouillage (53; 93) engageable par verrouillage mutuel avec l'ouverture de retenue (47; 87) de la paroi latérale côté intérieur (34; 74) dans le but de maintenir la section de saisie (45; 85) dans une position pliée.

2. Poche à tirette selon la revendication 1, dans laquelle le corps de poche à tirette (31a; 71a) et la section de saisie (45; 85) sont formées intégralement en une structure unitaire d'une seule pièce moulée à partir d'une résine synthétique.

3. Poche à tirette selon la revendication 1 ou 2, dans laquelle la saillie de verrouillage est pourvue d'une attache.

4. Poche à tirette selon la revendication 1 ou 2, dans laquelle la saillie de verrouillage est une griffe de verrouillage.

5. Portière de véhicule équipée de la poche à tirette selon l'une quelconque des revendications 1 à 4.
